(19) Europäisches Patentamt
European Patent Office
Office européen des brevets

(11) **EP 2 336 834 A1**

(12) **EUROPEAN PATENT APPLICATION**

(43) Date of publication:
**22.06.2011 Bulletin 2011/25**

(51) Int Cl.:
***G05B 13/02*** (2006.01)   ***F24F 11/00*** (2006.01)

(21) Application number: **09176692.3**

(22) Date of filing: **20.11.2009**

| (84) Designated Contracting States: **AT BE BG CH CY CZ DE DK EE ES FI FR GB GR HR HU IE IS IT LI LT LU LV MC MK MT NL NO PL PT RO SE SI SK SM TR** Designated Extension States: **AL BA RS** | (72) Inventors: <br>• **Vimberg, Priit** <br>  **10915 Tallinn (EE)** <br>• **Raestik, Raivo** <br>  **11913 Tallinn (EE)** |
| --- | --- |
| (71) Applicant: **Zerogroup Holding OÜ** **51003 Tartu (EE)** | (74) Representative: **Kupiainen, Juhani Kalervo** **IPR Partners Oy** **Bulevardi 2-4** **00120 Helsinki (FI)** |

(54) **A method and system for controlling environmental conditions of entity**

(57)   An adjusting of environmental conditions of an entity, such as a room, is described, where the entity has desired environmental conditions to be maintained and/or achieved. The environmental conditions may relate to e.g. temperature, humidity, $CO_2$ level, lighting, etc. The adjusting is implemented by equipments based on at least one controlling parameter provided by a controlling means. The controlling means is provided with at least one environmental condition measurement data related to the entity and measured by a measuring means. In addition the controlling means is provided with at least one outer parameter, such as weather conditions information. The controlling parameter is generated by using a neural algorithm having at least the following input: at least one measured environmental condition parameter related to the entity; and at least one outer parameter.

**FIG. 3**

**Description**

TECHNICAL FIELD OF THE INVENTION

The present invention relates to a method and system for controlling and adjusting environmental conditions of entities, such as rooms. The environmental conditions may relate to e.g. temperature, humidity, $CO_2$ level, electricity, access rules, water supply, and lighting, for example.

BACKGROUND OF THE INVENTION

An average household annually uses approximately 13 MWh of energy only for heating the premises. In addition, all those households generate approximately 1/5 of global $CO_2$ emissions. Operating costs (including energy costs) for the building can make up 80% of the total cost of ownership during the lifecycle of a building. Thus it is especially important to invest in energy efficiency, with today's rising energy prices, to save on future operating costs.

Solutions for energy saving and controlling are known from prior art, such as a multi-utility energy control system described in US 6,904,385, where a control center computer is connected to various utility consuming systems and is adapted to provide interactive opportunities for the consumer via a plurality of diverse energy and utility-related search engines. In addition the system is adapted to sense real time rates from existing utility meters, and receive and update alternative utility company competitive pricing information as well as provide short term utility contracts for purchase of competitively priced utilities from an alternative utility company.

Among others US 6,965,319 discloses a system having a central station being in a data communication with utility meters via internet for acquiring meter data. The central station includes a load forecasting agent to predict an amount of power used at remote locations based upon data acquired by the intelligent agent so that an optimization of operation of the meters can be done.

In addition, for example US 7,451,017 discloses a system for predicting energy use conditions to be encountered by a building. It provides Multi-Variant, Non-Linear load forecasting techniques, energy and cost savings calculations, and Weather Ranking, where the load forecasting technique accepts numerous external parameters as input. The system calculates energy and cost savings using Complex Rates and time-of-use energy data.

Furthermore US 6,577,962 discloses a system which generates an energy usage load forecast profiles base on a determined periodic energy load usage of the facility

Also different kinds of intelligent building systems are known from prior art, such as the building systems including security systems, fire control systems, elevator systems, and/or building environmental system described by US 7,451,017. The building environmental system may regulate e.g. temperature and air flow in a building. Air conditioning may include chillers for cooling air, heaters for heating air and fans for distributing air into a duct system that directs the flow of air to the various rooms of a building. It is also known that the speed of a motor that drives a fan may be controlled to regulate air flow within the system. In US 7,451,017 the control system is used to vary the fan motor speed in order to maintain the desired conditions within the building.

However, there are some disadvantages relating to the known prior art solutions, such as that they typically blindly follow the operational instructions or one parameter, such as temperature inside the building, when adjusting the cooling or heating of the building.

SUMMARY OF THE INVENTION

An object of the invention is to alleviate the problems and disadvantages relating to the known prior art solution. Especially the object is to allow a more sophisticated system, which would consider input parameters comprehensively, and thereby allowing further minimization of the energy consumption.

The object is achieved for example by the features of independent claims, such as claims 1, 8, 15.

The invention relates to a method for adjusting environmental conditions of an entity according to claim 1. In addition the invention relates to a controlling system for adjusting environmental conditions of an entity according to claim 8, as well as to computer program product 15.

According to an embodiment of the invention environmental conditions of an entity is adjusted, where the entity has desired environmental condition to be maintained and/or achieved. In the embodiment the environmental condition is advantageously adjusted by equipments, where the adjusting is based on at least one controlling parameter provided by a controlling means. The controlling means is provided advantageously by at least one environmental condition measurement data related to the entity and measured by a measuring means. In addition the controlling means is provided advantageously by at least one outer parameter, such as weather conditions information, where said outer parameter is independent of the entity's property. In the advantageous embodiment of the invention the controlling parameter providing to the equipments is generated by using a neural algorithm having at least the following input: at least one measured environmental condition parameter related to the entity; and at least one outer parameter.

According to an embodiment the environmental condition information may relate for example to indoor temperatures, indoor humidity, indoor $CO_2$-level, indoor/outdoor lighting and access rules used for access controlling to an entity, for example. The environmental conditions controlling means is adapted to control for example heating means, cooling means, ventilation means, lighting means and/or means for affecting humidity. However, it should be clear to a skilled person, that these are only examples and that the invention is not limited only to those examples, but also other environmental conditions may be adjusted by appropriated equipments known by the skilled person. The "means for affecting humidity" may be equipment, the primary purpose of which is to increase or reduce humidity. It may also be equipment, the primary purpose of which is something else, such as heating or cooling, but which also have an effect on the air humidity.

According to an embodiment the outer information may relate to identified presence information of a user in the entity and/or predicted location information of the user indicating when the user will left or arrive in the entity, where said predicted location information of the user is generated using a neural network, self-learning algorithms and/or traffic information gathered from the environment where the user moves. Also time, day and calendar event detection may be used as an input for the neural algorithm, whereupon the neural algorithm may output "sleep/wake-up" signals also based on time / calendar events. Thus the system of the invention may be aware for example about when the user has left the entity or about the prediction when the user has arrived at the entity. Thereupon the neural algorithm may generate a signal to be delivered as a controlling signal for appropriate equipments to go into the occupied or non-occupied state (possibly even with a suitable delay) based on said presence information and/or predicted location information. In addition also other possible information gathered from the environments may trigger the neural algorithm to provide controlling signals to the equipments in the entities to go into a certain state, such as to adjust, like close, ventilation and electricity in a fire situation.

The general or identified presence information may be composed for example by measuring means, such as for example modules having some presence indicator, such as an IR and/or $CO_2$ detector or motion detector or other detector, camera or sensor applicable for detecting presence known by the skilled person. It is also possible to use presence information which is based on access control equipments, which may be part of the system. The presence information used for the system controls may thus be identified presence information, including the identity information of the person/people who is/are present in the room/entity or other determined premises. Thus it is possible to use the identity information for the environmental controls and predict locations of a certain person/user.

The outer information may also relate in addition to current outdoor weather conditions (if applicable, indicators such as whether it is a sunny or cloudy day is also considered according to an embodiments, such as also the direction and angle the sun is shining), weather forecast information, and/or tariff (time related, and possibly also price forecast) of energy costs for changing the environmental conditions (e.g. heating/cooling) of the building (so that the building is advantageously e.g. heated during cheaper period of energy costs), as an example but not limiting only to those.

According to an embodiment the neural algorithm may be a self-learning neural algorithm. According to an embodiment of the invention the self-learning neural algorithm can be used e.g. for generating heating inertia information about the entity, which entity's environmental condition parameters the self-learning neural algorithm has as its input. The heating inertia relates to inertia of a building when e.g. cooling, as well as when heating. This way an installer doesn't have to consider the building's construction parameters, when the heating inertia is determined by the neural algorithm according to the invention.

The neural algorithm may learn the heating inertia feature of the building for example via the heating and/or cooling behaviour of the entity (such as building), when the entity is heated/cooled numbers of time in different situations. The neural algorithm advantageously takes into account the measured environmental conditions of the entity as well as the outer parameters and the consumed energy determined by said neural algorithm (one of the inputs), when the environmental condition of said entity is adjusted, such as the building heated or cooled. In addition the self-learning neural algorithm may also take into account at least one of the following:

a) current and desired indoor temperatures (of the entity in question and/or also of the other nearest) and possibly at least one of the outer information, when it is adapted to determine the control parameter signal to said equipments, such as heating, cooling and/or ventilation means,
b) current and desired indoor humidity and possibly at least one of the outer information, when it is adapted to determine the control parameter signal to said equipments, such as means for affecting humidity and/or ventilation means,
c) current and desired indoor $CO_2$-level and possibly at least one of the outer information, when it is adapted to determine the control parameter signal to said equipments, such as ventilation means, and/or
d) current and desired indoor/outdoor lighting and possibly at least one of the outer information, when it is adapted to determine the control parameter signal to said equipments, such as lighting means.

According to an advantageous embodiment of the invention the controlling parameters or signals generated by the neural algorithm are based also on the measured environmental condition and said desired environmental condition for said entity, which environmental condition is to be adjusted, in order to achieve or maintain said desired environmental condition for the desired state of said entity.

The environmental conditions of entities are advantageously adjusted, such as changed or maintained, by different equipments, the functioning of which can be controlled e.g. by a controlling means. The controlling means provide advantageously controlling parameters to said equipments, where the controlling parameters or signals are advantageously generated by the neural algorithm of the invention. The neural algorithm has advantageously different kinds of measuring data as an input, such as data related to the environment conditions, like temperature, humidity and other environmental condition information as well as also outer parameters as described in this document elsewhere, for example.

It should be noted that the controlling signals between the controlling means and equipments may be delivered via appropriate modules, which may additionally adjust the controlling signals for the equipments, such as perform analogy-digital conversions. In addition the measuring means may be an individual sensor, such as a thermometer, but according to the invention the measuring means may also be integrated into the module, or into the equipment or even user interface means through which the user may provide controlling inputs, such as desired temperatures. A control panel serving as a user interface may thus preferably serve both for controlling and measuring a certain physical magnitude of an entity.

According to an embodiment of the invention the control parameters are provided to the equipment with a certain delay and in a certain time window. Thereby the neural algorithm of the invention may take into account the delay for example when the user is arriving at the entity after leaving e.g. another one, as well as also possible rush hours, weather conditions and a vehicle used by the user. Also navigation information may be used, such as provided by the navigation systems of the user's vehicle system for example or a mobile phone based on the cellular navigation.

It is highly advantageous according to an embodiment of the invention that the controlling parameter is generated by using a neural algorithm having at least one of the following as an input: at least one measured environmental condition parameter related to said entity; and at least one outer parameter.

For example, with a neural algorithm it is possible to optimise energy consumption even if there are several parameters, such predicted energy cost, predicted weather information, presence information etc. With prior art system such optimisation would require excessive processing capacity.

The present invention offers numerous advantages, such as the combination of access and a security system with climate and lighting control in one complete intelligent system, which provides a complete overview of events happening in an entity or entities, and optimizes the work and maintenance of devices, giving them a longer useful life. It also considerably increases the inhabitants' security and comfort, saving much energy at the same time for numbers of entities without coming at the expense of comfort but on the contrary the users will experience even higher quality of life.

As an example the present invention may be implemented by one easy-to-use complete system which controls e.g. access and security, lighting, climate even at numbers of entities at the same time, where at least one parameter used for controlling the environmental condition of the first entity depends on at least one measured environmental condition parameter of the second entity being different that said first entity. The invention also provides a clear overview of the costs and events occurring in the entities.

In addition the system may be adapted to regulate e.g. the room temperature on the basis of the outdoor temperature or on the basis of a weather forecast, if desired. In addition at least one parameter related to the environmental conditions in another entity, such as workplace, can be taken into account when adjusting the environmental conditions in other entity, such as home. For example, if the user leaves work about at 5pm, this can be taken into account when regulating e.g. temperature at home so, that the home temperature is again adjusted to the comfort level from the economy mode. Taking all this into consideration, the present invention provides each entity with a stable climate of good quality with minimum energy consumption.

Furthermore, when the user leaves the entity, such as home, the user interface means may inform him if something is wrong in the home. For example, it will inform if a window has been left open, or a lamp is not turned off. The system may e.g. ask if warnings should be ignored or not. If the user leaves home, the system may offer to put the home into the economy mode. In addition, the present invention can also be adapted to create different solutions for special purposes, such as measuring working hours for people and machines, turning machines and devices on and off, or securely unlocking doors even through a web browser, executing routine tasks according to the user's wishes, sending out electric and water system readings, informing the administrative company of the need for maintenance of air conditioners, the heating system or water filters.

The entities where the invention can be used may be e.g. private houses, office buildings, factories, warehouses, schools, hospitals, museums etc. For example in companies the invention can be applied for alarm systems, access control and registration, reducing power and heating costs of rooms, determining the location of employees, individual use of cars and equipment, protection of the office computer systems against improper use, monitoring and measuring the use of production equipment in factories.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

BRIEF DESCRIPTION OF THE DRAWINGS

Next the invention will be described in greater detail with reference to exemplary embodiments in accordance with the accompanying drawings, in which

Figure 1      illustrates an exemplary hierarchy of the system according to an embodiment of the invention,

Figure 2      illustrates an exemplary apartment, where the system is used for controlling the environmental conditions according to an embodiment of the invention,

Figure 3      illustrates an exemplary method for adjusting environmental conditions of an entity according to an embodiment of the invention,

Figure 4      illustrates an exemplary scheme of states used in control algorithm (heating) according to an embodiment of the invention,

Figure 5      illustrates an exemplary scheme of states used in control algorithm (cooling) according to an embodiment of the invention,

Figure 6      illustrates an exemplary scheme of states used in control algorithm (rest mode) according to an embodiment of the invention,

Figure 7      illustrates an exemplary block scheme of a control algorithm based on neural algorithm (heating) according to an embodiment of the invention,

Figure 8      illustrates an exemplary block scheme of a control algorithm based on neural algorithm (cooling) according to an embodiment of the invention,

Figure 9      illustrates an exemplary controlled process (temperature) according to an embodiment of the invention, and

Figure 10      illustrates an exemplary structure of a neural network (or algorithm) according to an embodiment of the invention.

DETAILED DESCRIPTION

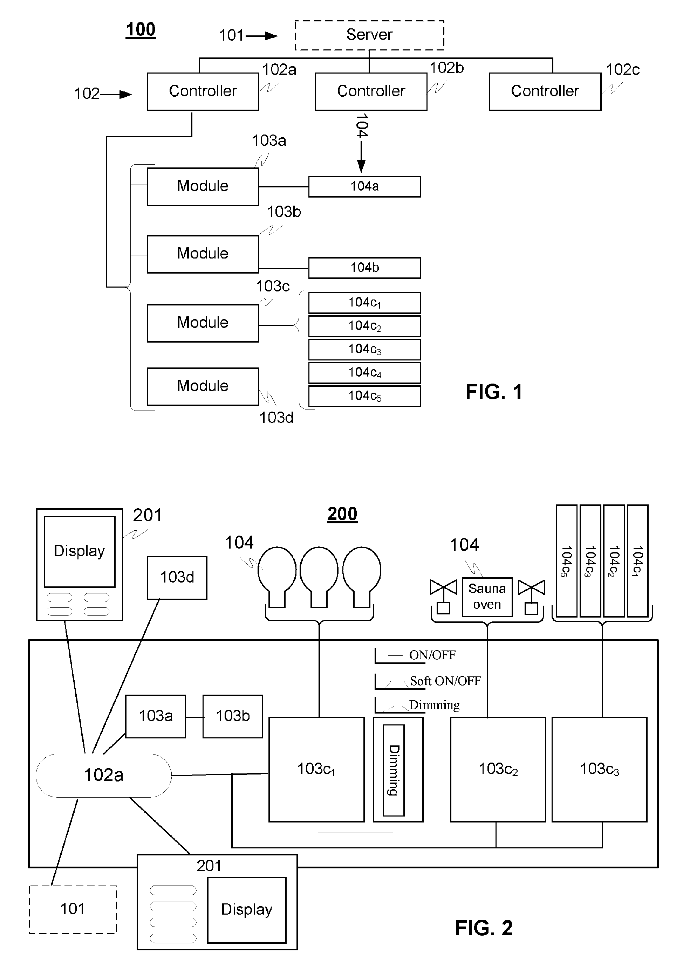

Figure 1 illustrates an exemplary hierarchy of the system 100 according to an embodiment of the invention. The system advantageously comprises two layers, namely a controller layer having controlling means or shortly controllers 102 and a module layer having modules 103. In addition the system may also have a server layer 101 having e.g. a main server, but it should be noted that the main server or server layer is not essential in every embodiment according to the invention, but the controlling means may be in data communications directly with each other without the need of server between.

According to an embodiment one controller 102a is advantageously related to one entity, such as an apartment, home, business office, factory or logistics warehouse. The controller 102 is a central hub communicating from one side with different kinds of modules e.g. through RS485 lines and from the other side with other controllers 102a, 102b, 102c located e.g. in different entities. It is preferable to use a serial data bus for the communication between the controllers and the modules because this way it is possible to connect several modules in chain instead of installing separate wires from a controller to each module which is controlled by the controller.

If the server is used (especially in more complex systems comprising e.g. hundreds of entities in a large area, such as a neighbourhood or suburb, but possibly also in smaller installations) the controllers 102 are in a data connection also with the server 101 through some communication system. If the server is installed locally in the same building as the controlled entities, the communication between the controllers and the server may be based on LAN or WLAN. If the server is located in some more distant premises, it may be preferable to use Internet connection between the server and the controllers.

When the server 101 is used the controller 102 may initiate a connection with the server after powering it up. A unique ID and security certificate may be checked by the server during the connection set-up, and the controller may also check the server's security certificate. If the unique ID and all certificates match, a secure communication channel is established. The communication between the controller 102 and server 101 is advantageously encrypted and therefore the public Internet can be used for data transmission. Each controller has a unique ID and advantageously also a security certificate.

As discussed earlier the controller 102a may be in data connection with the modules, such as for example with an access control module 103a, security module 103b, I/O module 103c or infrared module 103d. In addition the modules are in a data connection with different kinds of equipments 104 and/or sensors, such as the access control module 103a may be in data connection with the access managing equipment 104a, like a door sensor (sensing whether the door is open or closed so the equipment may also be in a simplest mode a sensor sensing some environmental condition), electric lock of the door (opening and closing the lock), a buzzer, open button, and key or ID reader. The security module 103b may be in data connection with a security sensor equipment 104b having e.g. input, such as a PIN code reader, and output adapted to switch an alarm ON and OFF, or to switch the local siren. The I/O module 103c may be adapted to send operating signals e.g. to a heating means $104c_1$, cooling means $104c_2$, ventilation means $104c_3$, lighting means $104c_4$, means for affecting humidity $104c_5$, and sprinkler system, but also gathering or receiving measuring signals from the equipments and/or sensors 104, said measuring signals indicating e.g. information relating to the environmental conditions of the entity, such as temperature, humidity and $CO_2$ level.

The controller has advantageously access to information related to the desired and/or measured environmental conditions, such as climate and lighting, access rules, security and remote metering. Said information related to the environmental conditions may be e.g. temperatures, humidity values, $CO_2$-levels, lighting conditions and security details when the entity to which the controller relates is either occupied or non-occupied and/or in some other state, such as for example in a fire situation or under a chancing weather condition. Temperature may be set e.g. lower for the non-occupied entity than for occupied entity, as well as a sprinkler system may be activated in a fire situation and message sent to the fire station.

According to an embodiment information related especially to desired environmental conditions is advantageously locally stored in the controller, which allows for autonomic work also in case of Internet connection loss. All data may be stored locally. According to an embodiment it can also be sent to the server after the Internet connection is restored and if the server is used.

Furthermore the modules are adapted to gather measuring information advantageously from the equipments, such as from heating means $104c_1$, cooling means $104c_2$, ventilation means $104c_3$, lighting means $104c_4$, means for affecting humidity $104c_5$ and sprinkler system. The measuring information may indicate for example current operating status of the equipment, but also temperature, relative humidity, $CO_2$ level, brightness conditions, possible fire and presence information about the presence of people (general presence and/or identified presence of certain people) in the entity. Modules are advantageously adapted to send said information to the corresponding controller or the controller is adapted to read said information from the modules.

The controller 102a is adapted to determine measuring information gathered from the equipments 104 and/or other means sensing the environmental conditions and based on the measuring information as well as information related to desired environmental conditions and/or rules input by the user determined and sent a control signal to at least one module being in a data connection with the corresponding equipment used for controlling the environmental condition of said entity.

According to an embodiment of the invention also the server 101 may be incorporated into the hierarchy of the system 100, whereupon some of the tasks dedicated to the controller (in the embodiment without the server) may also be managed by the server, such as analysing measuring information and determining control signal to be fed into the modules. The server is also typically used to control decisions beyond the reach of the controller due to the complexity of the rules or because of rules relating to signals from modules connected to different controllers.

Also, different signals and messages to and from outside the system 100 are advantageously handled by the server, such as for example information related to weather forecast, traffic jams, and tariff and/or prediction of the energy and water costs, as well as also other information related to environmental conditions outside the entities. For example if the server is provided with weather forecast information forecasting cooler weather for a certain area, the server may determine and sent a signal to the controllers located in said area in order to take into account the changing weather conditions. The server may even calculate, taking into account the energy prices, such as night-rate, the cheapest time for pre-heating the entities in said area, and sent signal indicating the optimal time window to the appropriate controllers.

The energy tariff information is preferably used as an input for the control system in deciding whether to cool or heat the building with the cooling/heating equipments, or to ventilate the building to bring cool or heat into the building from the outside of the building. Thus it is possible to minimise the energy cost by using the information on costs of different types of energy and using the currently least expensive energy source.

The server may be adapted to allow web-based system set-up and management, as well as to control logging of events so that all events are logged e.g. in the server SQL database and are accessible to queries e.g. from authorized outside applications (management tools). In addition the controller controlling and monitoring modules' status may send data to the server, where data may be stored e.g. an SQL database, as well as also processed and analysed and taken into account when determining control signals to the controllers. Furthermore the server may be used to manage configurations and updating the controllers' logic and/or software.

According to one embodiment of the invention the server is also used for providing access to external services via the Internet. For example, the user may get access to taxi service or pizza delivery service by using the user interface of the system. It is possible to store preliminary user information in the server, such as the address of the user's entity. This information is then automatically transmitted to the service provider when the user makes a service order with the user interface via the server and the Internet. Information relating to a et of service providers can be stored in the server, possibly including price information for the services and possible delivery times to be expected. This arrangement allows the user to use external services easily with readily available control panel, for example, without any need to start a computer or to look for suitable service providers.

The control system may also be used for controlling multimedia equipment of an apartment/building. This allows integration of all multimedia equipment into one system where a desired multimedia content can be selected from any user interface for replaying in a desired room, for example. this also allows to use centralised receivers which can be controlled to supply desired programs via monitors and speakers located in rooms.

As it can be noticed from the figure 1 the system advantageously comprises plurality of controllers 102a, 102b, 102c, which each is responsible advantageously of one entity, such as an apartment. According to the present invention minimizing the energy consumption and costs e.g. for larger or more complex entities can be achieved, when the controllers 102a, 102b, 102c of the different entities are in data connection with each other and where at least one environmental condition of the first entity somehow depends on at least one environmental condition of the second entity.

For example the user living at the first entity (like home) may work at the second entity (like workplace), whereupon the environmental conditions of the first and second entities may be adapted to affect with each other. For example when the user is at home the home may be switched into the occupied mode by the controller 102a (controller which is responsible of the environmental conditions of home) and the user's workplace into the economic mode by the controller 102b (controller which is responsible of the environmental conditions of the workplace) at the same time, because the user is at home and not at work. This means that for example the temperature and ventilation will be adjusted at home in comfortable level (e.g. determined by the user beforehand as he wishes) and at the same time at work into the economic mode.

In addition it should be noticed that the system of the invention may control the equipments of the entities softly so for example when the user is leaving his workplace, the equipments and/or sensors detecting the identified presence of the user at his workplace may sent a signal to the controller 102b of the workplace to indicate that the user is leaving. The workplace's controller 102b may in its part sent a signal indicating the leaving to the controller 102a at the user's home, whereupon the controller 102a at the user's home may control the function of equipments 104 at home via modules in order to achieve comfortable environmental conditions when the user arrives.

Overall it can be noticed that according to an embodiment at least one parameter used for controlling the environmental condition of the first entity may depend on at least one measured environmental condition parameter of the second entity being different that said first entity.

In addition according to an embodiment of the invention the system utilises neural algorithm, such as self-learning algorithms, such as learning how much time it typically takes for the user to arrive after leaving workplace, so that the system can anticipate and optimize the optimal rate for changing the environmental conditions, such as heating rate from 18°C to 22°C. Furthermore the system may utilize neural network and self-learning algorithms, such as learning inertia of the entity relating e.g. to cooling or heating so e.g. how much time it takes typically to warm the environment from 18°C to 22°C. In addition the system may also take into account the possible rush hour so that it can delay the heating process respectively, for example, as well as changing weather conditions forecast.

It should be noted that the learning may be continuous learning, where the system updates its learning every time when the environment condition must be changed, for example taking into account also the current weather (wind, sunny, humidity and outdoor temperature, for example) when changing the entity's temperature and/or humidity, for example. Thus the system can later take into account for example that for example when the indoor temperature must be changed from 18°C to 22°C it takes e.g. 22 min longer, if the outdoor temperature is -15° and it is winding than if the outdoor temperature is +15° and it is sunny.

According to an advantageous embodiment of the invention the neural algorithm is utilised on the controlling means, whereupon the controlling means may provide at least one controlling parameter to the equipments so that the controlling parameter is generated by using a neural algorithm having at least one of the following as an input: at least one measured environmental condition parameter related to said entity, and at least one outer parameter, as is discussed elsewhere in this document.

Figure 2 illustrates an exemplary single apartment 200, where the system, such as the system 100, is used for controlling the environmental conditions according to an embodiment of the invention. The hierarchy of the components, such as controllers 102 (i.e. controlling means), modules 103 and equipments 104, as well as also a server 101 (if used), is advantageously similar than described in connection with the figure 1.

Even though it is not described in figure 1, the system 100 advantageously comprises also a user interface means, such as a control panel 201 being in a data connection with the controller responsible of controlling the environmental conditions of said entity 200. The user interface means 201 is used e.g. for inputting control parameters for desired environmental conditions, but it can be used also for informing the user e.g. about the current environmental conditions of the entity, energy consumption and maintenance costs, as well as displaying information transferred from the outside of the entity 200, such as for example weather forecast information or outside environmental information sent by the server in the embodiment, where the server is in use. Also some of information sent by the other controllers managing the other entities may be displayed, such as e.g. information about possible fire in the neighbourhood or environmental conditions of the user's workplace. In addition the user interface means 201 may comprise also at least one sensor for determining environmental conditions, such as temperature and other parameters discussed elsewhere in this document.

The user interface means 201 can be implemented e.g. by a touch screen. It should be noted that there may be numbers of user interface means 201 in the same entity, such as one on the first floor and the other on the second floor. According to an embodiment an LCD keypad may be installed e.g. in the garage instead of a costly touch screen. In addition an infrared module 103d (or other module able to a wireless communicating) may also be installed nearby the garage, so that the user may control for example the function of garage door by the remote controller. It should be noticed that also information from these user interface means can be used for example for controlling the environmental condition inside the apartment 200, such as for example when the user is arrived in the garage, the lighting and air ventilation may be switched into the occupied mode.

In one embodiment the user interface includes a control panel which also has sensors for providing information on the environmental conditions. Such a sensor may be e.g. a light sensor, a temperature sensor, movement sensor etc. This way it is not necessary to install the sensors and their wiring separately. The sensors of a control panel may preferably measure such physical magnitudes of an entity which may be controlled by the same control panel.

It should be noticed that the user interface means may be web-based and accessible from a computer or handheld device, which may be connected to the Internet or LAN. The user interface means may also be used for real time system monitoring and controlling e.g. via the touch screen, computer or hand-held device, as well as overall managements, such as managing users / access control rules, viewing logs, work time and security areas status, arming/ disarming etc.

The system 100 may be used at the entity 200 for controlling the same exemplary environmental conditions as described elsewhere in this document. The controller 102a is used at the entity 200 for example controlling access and security means via the access control module 103a and security module 103b, respectively. In addition the controller 102a communicates with the I/O module $103c_1$ to control lighting conditions (illuminators and lamps $104c_4$, for example), and the I/O module $103c_2$ to control the heating of a sauna (oven, heat collector, taps, water valves in the sauna), as well as the I/O module $103c_3$ to control air condition, such as a heating means $104c_1$, cooling means $104c_2$, ventilation means $104c_3$, and/or means for affecting humidity $104c_5$.

Next few environmental conditions controlling examples are handled in connection with the apartment 200. Typically an entity's climate is mostly controlled by heating, cooling and ventilation. Those systems (according to prior art solutions) are generally "unaware" of each other's activities. For example, the heating system may be functioning at the same time the air conditioner is cooling. In addition, a constant flow of sufficient fresh air in the building is maintained according to a pre-controlled volume, not on the basis of air quality or the people present. All this requires an unreasonable amount of money and natural resources.

One object of the present invention is to make it possible to ensure that for example heating and cooling are not operating simultaneously in the same room, and that the entity's ventilation process is carried out according to the quality of the air or according to the people present in the room. This can be achieved for example by collecting information by either separate sensors or sensors integrated with control panels or modules relating to indoor and outdoor temperature and those of air quality, as well as by the access control and security systems. Also inertia of a building when cooling, as well as when heating is considered, and if applicable, indicators such as whether it is a sunny or a cloudy day and a 4-day forecast are also added. According to an embodiment of the invention also a neural network technology may be utilized for example in a self-learning climate or other environment condition regulation. The self-learning capability automatically adjusts the climate control system to each room's energy characteristics, i.e. an installer doesn't have to consider the building's construction parameters (such as heating inertia etc.) and calculate the appropriate static control characteristics. These functions are built advantageously into the system 100 and are for example controlled by a computer program product run at/by the controller or server (if used) being in data communication with the modules. This has clear advantages and rapidly reduces the system adjustment time and makes maximum energy savings and constant automatic tuning of the climate control algorithm possible.

Furthermore additional energy savings are achieved by room-based ventilation control according to the invention. Ordinarily savings on energy are achieved by time-based automation (date and time), but the present invention provides an additional saving method, such as identified and/or general presence based climate control. Therefore if there's no one in a room, the system automatically decreases the heat setting and resets ventilation at the minimum level. Whenever a user enters the room, the normal climate control settings are restored. Also neural network and self-learning algorithms can be used for predicting e.g. when the user is arriving in the entity so that the equipments for controlling the environmental conditions can be switched for suitable mode and power at an appropriate moment and that the environmental condition, such as temperature, will be comfort at the time when the user arrives.

Also lighting control of the apartment 200 is one of the environmental conditions controlled easily by the present invention. Even though a control of indoor and outdoor lighting is not very common these days, at the same time, lighting comprises a large share of electric bills and wastes natural resources. The present invention is also able to ensure control over the indoor and outdoor lighting. Lighting can be controlled according to the security of the building as well as by people's movement. For example, when the security system is switched off in the dark, sufficient lighting will be automatically switched on, as well as office rooms are lighted in accordance with the people arriving in rooms. The system 100 may also be adapted to switch off the lighting when people leave the rooms. Relevant information is obtained from the equipments and measuring devices read by the modules and controllers, such as from the access control or alarm systems, motion detectors and/or $CO_2$ level detector, for example.. It is also preferable to use self learning neural network for controlling lighting, whereby the system may learn which amount of light is required inside the building in e.g. different levels of light outside the building.

Thus the system may be adapted to control a building's lighting according to the people presence (general or identified), date and time, and also inside and outside illuminance conditions, room by room, whereupon it is possible to achieve up to 44% energy savings on lighting by combining only these three control methods. It should be noted that the presence based lighting control offers savings, but also comfort simultaneously. Forgotten lights can be totally/partly switched off or the power can be reduced to increase savings if there has been no movement in a room for a certain time. Identified movements and automatically switched on lights make living more comfortable. Especially, if identified presence information is used it is possible to control the environment according to the personal preferences of each person. It's important to note that no special additional motion detectors are needed, because the system may use the same motion detectors used for security purposes. In general, it is preferable to use the information of certain sensors / measurement devices for both environmental control and security purposes.

In more details the date- and time-based lighting control makes it possible to switch all lights on and off at a certain time and, as a result, avoid wasting energy. Illuminance-based lighting control offers in its part the opportunity during the day to switch off lights which are pointless because there's enough illuminance coming through the windows. The illuminance conditions can be taken into account for example by measuring with appropriate sensors.

The system 100 may also comprise a dimming module, which can be utilized for example in controlling the lighting and ventilation, whereupon the functioning of the corresponding equipments can be implemented smoothly. In other words for example turning the lights ON or OFF can be done slowly, as well as also the power of ventilation, heating, cooling and/or humidifying may also be controlled to happen slowly or to be something between 0-100% of the maximum power. This ensures both the energy savings as well as also comfortability simultaneously.

The system 100 of the invention may also manage an alarm system of the apartment 200 e.g. by providing alarm and general/identified presence information to security companies, customers and other appropriate parts, such as lighting and climate control. According to an embodiment of the invention there's no need to integrate the system 100 into a separate alarm system, but all connections e.g. to lighting and climate control are handled by the software run at/by the controller or server (if used). The configuration of the function can be done simples just by defining rules. The system 100 may make an alarm to an appropriate party for example if there is a burglar, fire, panic or tampering or forced opening in the entity, or if some climate conditions indicating value (such as temperature, humidity, $CO_2$ level) exceeds the allowed range.

Furthermore the system 100 of the invention may also manage an access control of the apartment 200 e.g. by providing identified presence and location information for registering people's movements and using said information for controlling e.g. lighting and climate. When identified presence information is used in the system, this makes the system capable to personal/identified control of the environment. The system thus has the information on the person who is actually in a certain room or other premises. This way the settings of the control system can be fitted to suit those people and their preferences which are stated in the system. With the identified presence information the system can predict lighting and other environmentalconditions needed in particular parts of the building and/or buildings.

In addition the system 100 may allow a remote reading function, where different meters can be read to identify e.g. consumptions in the apartment or building and discover possible wasteful behaviour.

Also an intercom means can be incorporated into the system 100 used in the apartment 200. An audio/video intercom function may be combined e.g. with a VoIP (Voice over IP) technology-based voice system and a surveillance camera-based video system. The controller 102a or server (if used) comprises a VoIP gateway so that video pictures from the (video) security system and voice signals from outside are combined and shown on the user interface means, such as via a touch screen and on a web browser. According to an exemplary scenario of the invention a guest may dial the phone number of the apartment/house, whereupon the controller 102a receives a signal, switches the touch screen picture to a preconfigured surveillance camera and plays a doorbell melody on a loudspeaker. The user may answer the call, cancel the call or let the guest in at once without answering the call. Video messages may be available for leaving messages if people are not home.

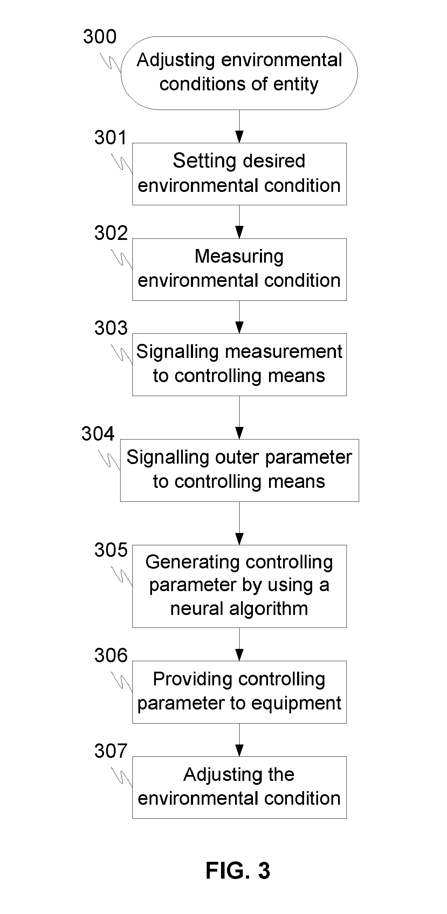

Figure 3 illustrates an exemplary method 300 for adjusting environmental conditions of an entity according to an embodiment of the invention, where in step 301 desired environmental conditions for the entity is set, such as desired temperature and humidity for example for night and day, as well as for occupied and non-occupied states, for example. Also other conditions can be set in step 301 and for a different time or other state, as the skilled person will understand.

In step 302, so during the adjusting the environmental conditions (either maintaining the current conditions or changing some parameters in order to achieve the desired one) the current environmental conditions are measured, such as temperature and humidity, for example. The measurements are communicated the in step 303 e.g. to the controlling means or the like device. In addition in step 304 also outer parameters are signalled to the controlling means or the like device.

In step 305 the controlling parameters are generated by using a neural algorithm, which has at least one of the measured information communicated in step 303 and/or signalled outer parameters as an input. The neural algorithm generates said controlling parameters using e.g. the aforementioned information, such as signalled parameters and measured data (measured environmental condition), but it can also use e.g. said desired environmental condition set for said entity in order to achieve or maintain said desired environmental condition for the desired state of said entity by optimising the adjustment at the same time for example by taking into account the changing weather conditions as well as also tariffs for the energy cost variations during a day or week.

In step 306 the generated controlling parameters are signalled to at least one equipment adjusting the environmental conditions, such as a heater or cooler or means for affecting humidity, whereupon in step 307 the equipment functions with said controlling parameters in order to achieve or maintain said desired environmental condition for the desired state of said entity.

It should be noted that the adjusting process 300 is advantageously continuous project, whereupon the steps 301-307 are repeated continuously and that the order of the steps is only exemplary in figure 3 and it can be varied during the process. In addition is should be noted that different kinds of desired environmental conditions can be set, and that the invention is not limited to only those disclosed by figure 3.

In the following figures the following variables are used:

$T_c$         current indoor temperature,
$T_{sp}$        desired temperature,
$\Delta T$         global decision interval,
ds         decision step,
u          control signal,
udz       upper dead zone,
ldz        lower dead zone,
maxht     maximum hold temperature,
minht      minimum hold temperature.

In addition in the following figures the following operations have the following meaning:

-    Soft regulation: the purpose of this method is tracking of changes in environment and the analysis of the incoming data. It turns off all devices responsible for the control of air temperature.
-    Temperature hold: the purpose of this method is to hold the surrounding temperature around the desired value by means of a neural network. It consists of a number of different states:

   •    NN decision - direct place of the calculation of the control signal by means of a neural network or neural algorithm according to the invention.
   •    OFFON_OFF - the first part of the temperature hold interval with Off → On logic. During this state all devices responsible for the control of air temperature will be turned off.
   •    OFFON_ON - the second part of the temperature hold interval with Off → On logic. During this state the device responsible for the control of air temperature will be turned on.
   •    ONOFF_ON - the first part of the temperature hold interval with On → Off logic. During this state the device responsible for the control of air temperature will be turned on.

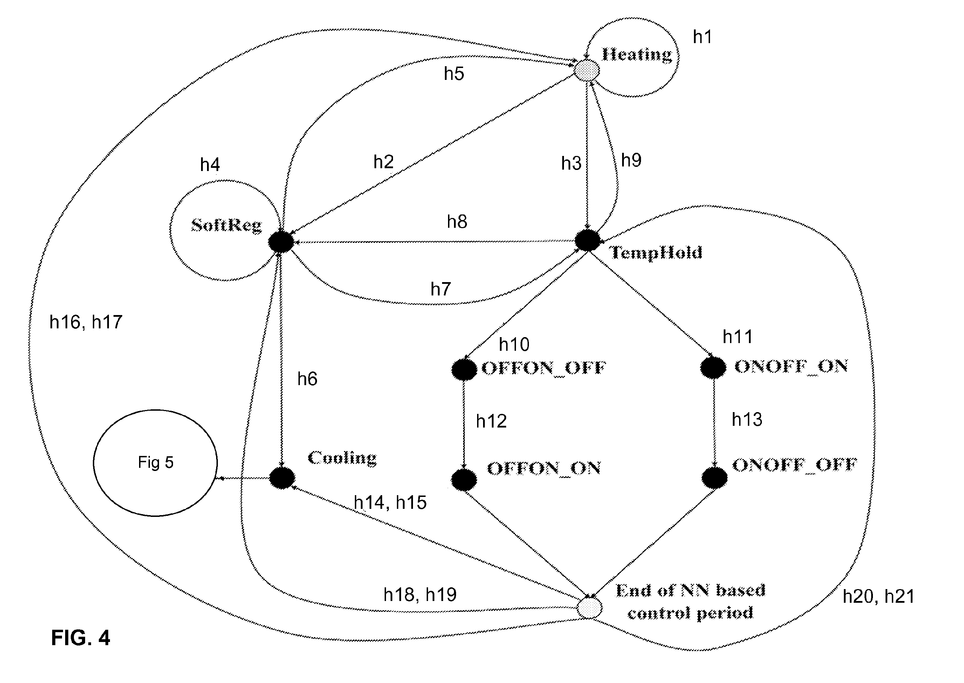

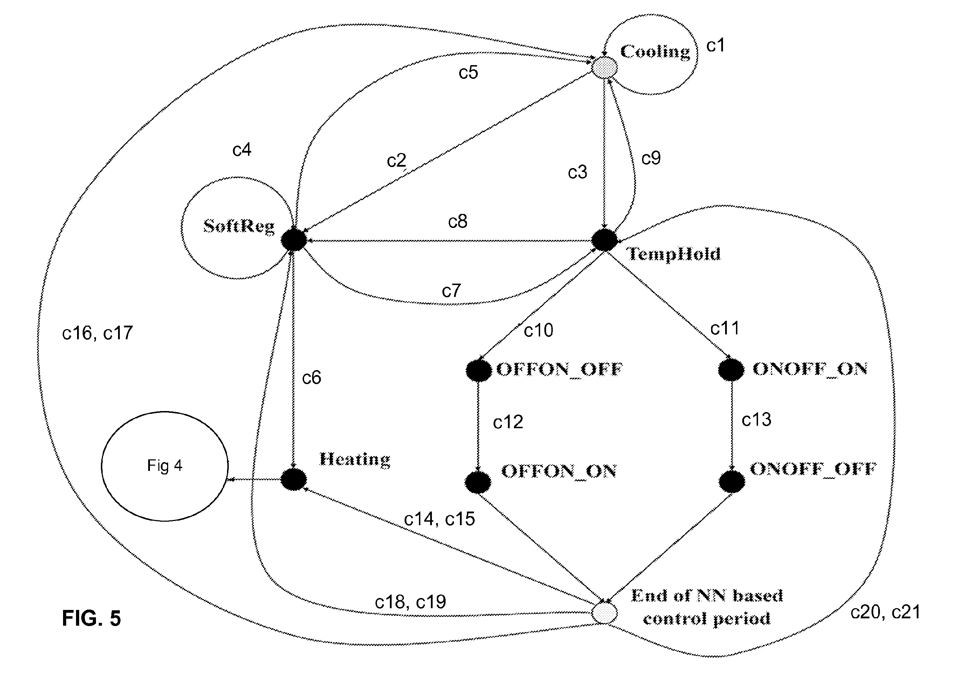

- ONOFF_OFF - the second part of the temperature hold interval with On → Off logic. During this state all devices responsible for the control of air temperature will be turned off.
- End of NN based control period - an abstract state, which exists only on the control scheme depicted in Figure 4 or Figure 5.

Figure 4 illustrates an exemplary scheme of states used in control algorithm (heating) according to an embodiment of the invention, where the heating is a method for increasing the temperature in environment surrounding the measuring means, such as a sensor measuring environmental temperature. The heating signal turns on the equipment capable to execute the given operation, such as turns the heater on.

- h1: the heating is on (the transition is Heating → Heating in order to achieve the desired state or maintain it) as long as the desired temperature is greater or equal than current temperature, i.e. $T_{sp} \geq T_c$.

- h2: if the desired temperature is lower than current temperature, i.e. $T_{sp} < T_c$, the transition is Heating → Soft regulation.

- h3: if the current temperature is greater or equal than minimum hold temperature and lower or equal than maximum hold temperature, i.e. minht $\leq T_c \leq$ maxht, the transition is Heating → Temperature hold.

- h4: if the current temperature is greater than maximum hold temperature and lower than maximum hold temperature plus dead zone, i.e. maxht $< T_c <$ maxht + udz, the transition is Soft regulation → Soft regulation.

- h5: if the current temperature is lower than minimum hold temperature, i.e. $T_c <$ minht, the transition is Soft regulation → Heating.

- h6: if the current temperature is greater or equal than maximum hold temperature plus dead zone, i.e. $T_c \geq$ maxht + udz, the transition is Soft regulation → Cooling.

- h7: if the current temperature is greater or equal than minimum hold temperature and lower or equal than maximum hold temperature, i.e. minht $\leq$ Tc $\leq$ maxht, the transition is Soft regulation → Temperature hold.

- h8: the transition Temperature hold → Soft regulation is decided by NN.

- h9: the transition Temperature hold → Heating is decided by NN.

- h10: if the desired temperature is lower than current temperature, i.e. $T_{sp} < T_c$, the transition is Temperature hold → OFFON_OFF.

- h11: if the desired temperature is greater or equal than current temperature, i.e. $T_{sp} \geq T_c$, the transition is Temperature hold → ONOFF_ON.

- h12: the transition OFFON_OFF → OFFON_ON is decided by NN.

- h13: the transition ONOFF_ON → ONOFF_OFF is decided by NN.

- h14: if the current temperature is greater or equal than maximum hold temperature plus dead zone, i.e. $T_c >$ maxht + udz, the transition is OFFON_ON → Cooling

- h15: if the current temperature is greater or equal than maximum hold temperature plus dead zone, i.e. $T_c >$ maxht + udz, the transition is ONOFF_OFF → Cooling.

- h16: if the current temperature is lower than minimum hold temperature, i.e. $T_c <$ minht, the transition: OFFON_ON → Heating.

- h17: if the current temperature is lower than minimum hold temperature, i.e. Tc < minht, the transition is ONOFF_OFF → Heating.

- h18: if the current temperature is greater than maximum hold temperature and lower than maximum hold temperature plus dead zone, i.e. maxht < $T_c$ < maxht + udz, the transition is OFFON_ON → Soft regulation.

- h19: if the current temperature is greater than maximum hold temperature and lower than maximum hold temperature plus dead zone, i.e. maxht < $T_c$ < maxht + udz, the transition is ONOFF_OFF → Soft regulation.

- h20: if the current temperature is greater or equal than minimum hold temperature and lower or equal than maximum hold temperature, i.e. minht ≤ $T_c$ ≤ maxht, the transition: OFFON_ON → Temperature hold.

- h21: if the current temperature is greater or equal than minimum hold temperature and lower or equal than maximum hold temperature, i.e. minht ≤ $T_c$ ≤ maxht, the transition is ONOFF_OFF → Temperature hold.

Figure 5 illustrates an exemplary scheme of states used in control algorithm (cooling) according to an embodiment of the invention, where the cooling is a method for lowering the temperature in environment surrounding the sensor. The cooling signal turns on the equipment capable to execute the given operation, such as turns the cooler on.

- c1: the cooling is on (the transition is Cooling → Cooling in order to achieve the desired state or maintain it) as long as the desired temperature is lower or equal than current temperature, i.e. $T_{sp}$ ≤ $T_c$.

- c2: if the desired temperature is greater than current temperature, i.e. $T_{sp}$ > $T_c$, the transition is Cooling → Soft regulation.

- c3: if the current temperature is greater or equal than minimum hold temperature and lower or equal than maximum hold temperature, i.e. minht ≤ $T_c$ ≤ maxht, the transition is Cooling → Temperature hold.

- c4: if the current temperature is lower than minimum hold temperature and greater than minimum hold temperature minus dead zone, i.e. minht > $T_c$ > minht → dz, the transition is: Soft regulation → Soft regulation.

- c5: if the current temperature is greater than maximum hold temperature, i.e. $T_c$ maxht, the transition is Soft regulation → Cooling.

- c6: if the current temperature is lower or equal than minimum hold temperature minus dead zone, i.e. $T_c$ < minht - ldz, the transition is Soft regulation → Heating.

- c7: if the current temperature is greater or equal than minimum hold temperature and lower or equal than maximum hold temperature, i.e. minht ≤ $T_c$ ≤ maxht, the transition is Soft regulation → Temperature hold.

- c8: the transition Temperature hold → Soft regulation is decided by NN.

- c9: the transition Temperature hold → Cooling is decided by NN.

- c10: if the desired temperature is greater than current temperature, i.e. $T_{sp}$ > $T_c$, the transition is Temperature hold → OFFON_OFF

- c11: if the desired temperature is lower or equal than current temperature, i.e. $T_{sp}$ ≤ $T_c$, the transition: Temperature hold → ONOFF_ON.

- c12: the transition OFFON_OFF → OFFON_ON is decided by NN.

- c13: the transition ONOFF_ON → ONOFF_OFF is decided by NN.'

- c14: if the current temperature is lower or equal than minimum hold temperature minus dead zone, i.e. Tc < minht - ldz, the transition is OFFON_ON → Heating.

- c15: if the current temperature is lower or equal than minimum hold temperature minus dead zone, i.e. $T_c$ < minht - ldz, the transition is ONOFF_OFF → Heating.

- c16: if the current temperature is greater than maximum hold temperature, i.e. $T_c$ > maxht, the transition: OFFON_ON → Cooling.

- c17: if the current temperature is greater than maximum hold temperature, i.e. $T_c$ > maxht the transition is ONOFF_ OFF → Cooling.

- c18: if the current temperature is lower than minimum hold temperature and greater than minimum hold temperature minus dead zone, i.e. > $T_c$ > minht - ldz, the transition: OFFON_ON → Soft regulation.

- c19: if the current temperature is lower than minimum hold temperature and greater than minimum hold temperature minus dead zone, i.e. > $T_c$ > minht - dz, the transition is ONOFF_OFF → Soft regulation.

- c20: if the current temperature is greater or equal than minimum hold temperature and lower or equal than maximum hold temperature, i.e. minht ≤ $T_c$ ≤ maxht, the transition: OFFON_ON → Temperature hold.

- c21: if the current temperature is greater or equal than minimum hold temperature and lower or equal than maximum hold temperature, i.e. minht ≤ $T_c$ ≤ maxht, the transition: ONOFF_OFF → Temperature hold.

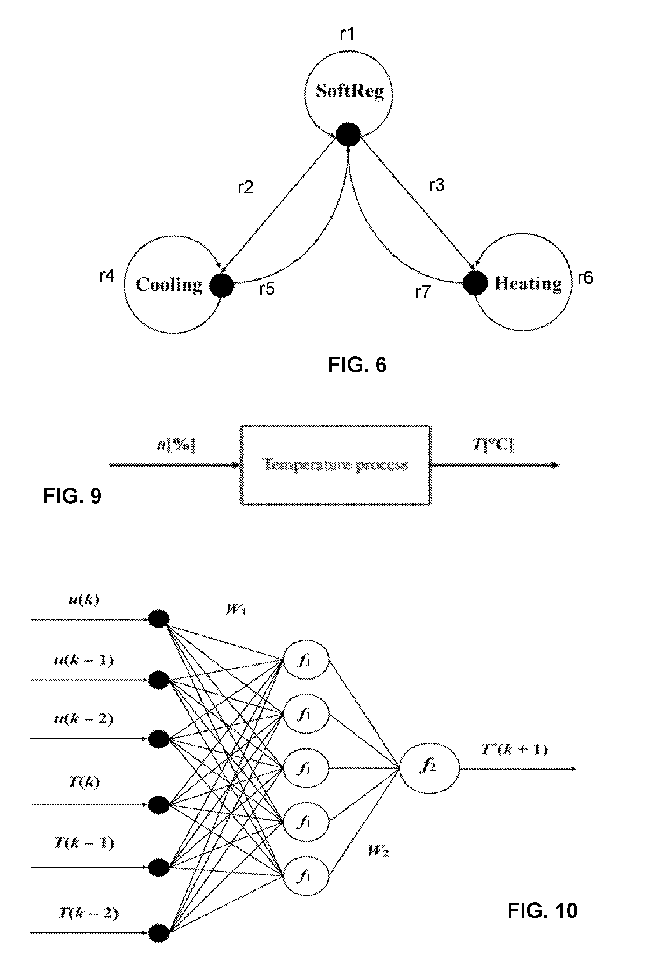

Figure 6 illustrates an exemplary scheme of states used in control algorithm (rest mode) according to an embodiment of the invention, where the purpose of the soft regulation method is tracking of changes in environment and the analysis of the incoming data. The soft regulation typically turns off all devices responsible for the control of air temperature.

- r1: if the current temperature is greater or equal than minimum hold temperature and lower or equal than maximum hold temperature, i.e. minht ≤ $T_c$ ≤maxht, the transition is Soft regulation → Soft regulation.

- r2: if the current temperature is greater than maximum hold temperature, i.e. $T_c$ >maxht, the transition is Soft regulation → Cooling.

- r3: if the current temperature is lower than minimum hold temperature, i.e. $T_c$ < minht, the transition is Soft regulation → Heating.

- r4: if the current temperature is greater than maximum hold temperature, i.e. $T_c$ > maxht, the transition is Cooling → Cooling.'

- r5: if the current temperature is greater or equal than minimum hold temperature and lower or equal than maximum hold temperature, i.e. minht ≤ $T_c$ ≤maxht, the transition is Cooling → Soft regulation.

- r6: if the current temperature is lower than minimum hold temperature, i.e. $T_c$ < minht, the transition is Heating → Heating.

- r7: if the current temperature is greater or equal than minimum hold temperature and lower or equal than maximum hold temperature, i.e. minht ≤ $T_c$ ≤ maxht, the transition is Heating → Soft regulation.

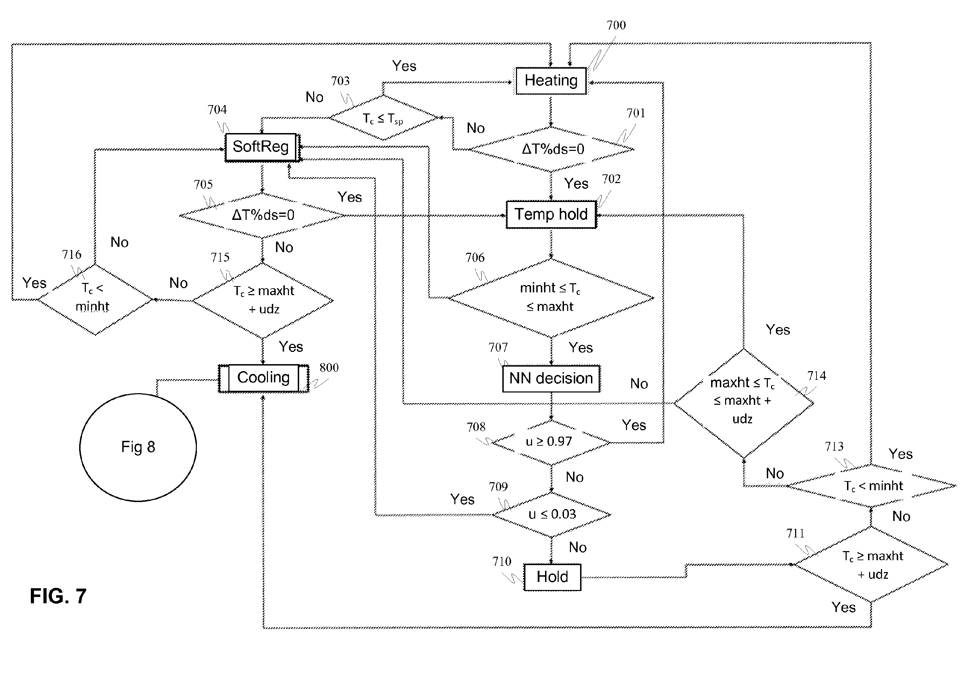

Figure 7 illustrates an exemplary block scheme of a control algorithm based on neural algorithm (heating) according to an embodiment of the invention, where the core principle is analogous to the heating process depicted in connection figure 4. If in step 701 the value of the current temperature is for example between the minimum hold temperature and maximum hold temperature, the next step is 702 for holding the temperature. If this is not the case, the current temperature is compared with the desired temperature in step 703 so that if the desired temperature is equal or greater than the current temperature, the process is continued in step 700. Otherwise it is continued in step 704 (Soft Regulation) and the temperature is hold 702 as long as the current temperature is for example between the minimum hold temperature and maximum hold temperature in step 705, as in step 701.

The temperature is hold by comparing the current temperature $T_c$ to the minht and maxht in step 706, and if minht ≤ $T_c$ ≤ maxht is not true the process is continued by soft regulation in steps 704. Otherwise NN decision is taken in step 707, which outputs the control signal "u". If its value is over a certain threshold value, such as 0.97 in step 708, the process is continued in step 700 by heating. Otherwise its value is compared to the lower threshold value in step 709, and if its value is below said lower threshold value, such as 0.03, the process is continued by soft regulation in step 704 again.

If the value of the control signal "u" is between the afore mentioned upper and lower threshold values, the current condition will then be hold in step 710 so that the current temperature is monitored against the maximum hold temperature plus dead zone in step 711, and if $T_c$ ≥ maxht + udz the process is continued in cooling step 800, and otherwise, if the current temperature is lower than minimum hold temperature in step 713, i.e. $T_c$ < minht, the process is continued by heating in step 700. Otherwise, so if the maxht $\leq T_c \leq$ maxht + udz in step 714, the process is continued in step 702, otherwise in step 704.

If the current temperature is for example not between the minimum hold temperature and maximum hold temperature in step 705, the process is continued in step 715 by comparing the current temperature to maximum hold temperature plus dead zone in step 715, similarly as in step 711, and if $T_c \geq$ maxht + udz the process is continued in cooling step 800. If $T_c \geq$ maxht + udz is not true, the process is then continued in step 716, and if $T_c \leq$ minht in step 716, the process is continued by heating in step 700, otherwise in step 704 by soft regulation.

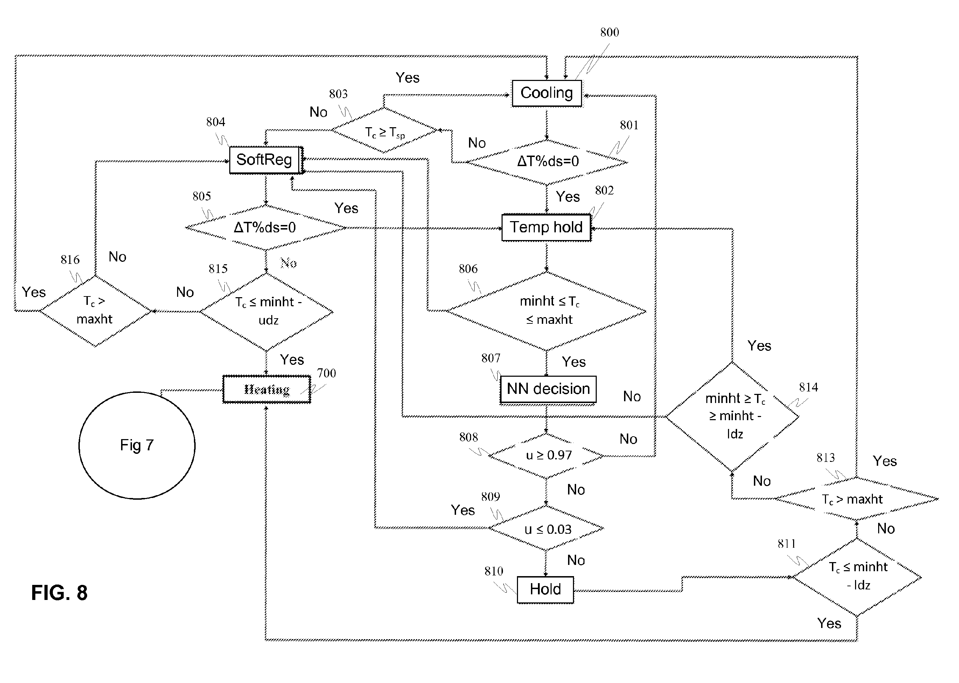

The cooling process 800 is depicted in figure 8.

Figure 8 illustrates an exemplary block scheme of a control algorithm based on neural algorithm (cooling) according to an embodiment of the invention, where the core principle is analogous to the cooling process depicted in connection figure 5. If in step 801 the value of the current temperature is for example between the minimum hold temperature and maximum hold temperature, the next step is 802 for holding the temperature. If this is not the case, the current temperature is compared with the desired temperature in step 803 so that if the desired temperature is equal or lower than the current temperature, the process is continued in step 800. Otherwise it is continued in step 804 (Soft Regulation) and the temperature is hold 802 as long as the current temperature is for example between the minimum hold temperature and maximum hold temperature in step 805, as in step 801.

The temperature is hold by comparing the current temperature $T_c$ to the minht and maxht in step 806, and if minht $\leq T_c \leq$ maxht is not true the process is continued by soft regulation in steps 804. Otherwise NN decision is taken in step 807, which outputs the control signal "u". If its value is over a certain threshold value, such as 0.97 in step 808, the process is continued in step 800 by heating. Otherwise its value is compared to the lower threshold value in step 809, and if its value is below said lower threshold value, such as 0.03, the process is continued by soft regulation in step 804 again.

If the value of the control signal "u" is between the afore mentioned upper and lower threshold values, the current condition will then be hold in step 810 so that the current temperature is monitored against the minimum hold temperature minus dead zone in step 811, and if $T_c \leq$ minht - Idz the process is continued by heating in step 700, and otherwise, if the current temperature is greater than maximum hold temperature in step 813, i.e. $T_c$ >maxht, the process is continued by heating in step 800. Otherwise, so if the minht $\geq T_c \geq$ minht + Idz in step 814, the process is continued in step 802, otherwise in step 804.

If the current temperature is for example not between the minimum hold temperature and maximum hold temperature in step 805, the process is continued in step 815 by comparing the current temperature to minimum hold temperature minus dead zone in step 815, similarly as in step 811, and if $T_c \leq$ minht - Idz the process is continued by heating in step 700. If $T_c \leq$ minht - Idz is not true, the process is then continued in step 816, and if $T_c$ > maxht in step 816, the process is continued by cooling in step 800, otherwise in step 804 by soft regulation.

The heating process 700 is depicted in figure 7.

Figure 9 illustrates an exemplary controlled process for temperature according to an embodiment of the invention, where in its simplicity controlling parameter or signal u[%] is provided to appropriate equipments, such as to a heater in order to adjust the environmental condition, such as maintaining or achieving the desired temperature. It is to be noted that u[%] may advantageously have all value between 0-100%, whereupon the power of the controlled equipment can be adjust also between 0-100% of the maximum power.

Figure 10 illustrates an exemplary structure of an artificial neural network (or algorithm) used for modelling of the adjusting process according to an embodiment of the invention, where the neural network / algorithm has plurality of $u(k):s$ (current and previous control signals) and $T(k):s$ (current and previous temperatures) as input parameters for generating for example $T^*(k + 1)$, i.e. an estimation of the temperature on the following time step (prediction on one step).

$W1$ and $W2$ are matrices of parameters of the neural network (synaptic weights), where:

$$W_1 = \begin{bmatrix} w_{11}^1 & K & w_{16}^1 \\ M & O & M \\ w_{51}^1 & L & w_{56}^1 \end{bmatrix}$$

$$W_2 = \begin{bmatrix} w_{11}^2 & K & w_{15}^2 \end{bmatrix}$$

Values of those parameters are calculated by a training algorithm, such as

$$P(k) = \begin{bmatrix} u(k) \\ u(k-1) \\ u(k-2) \\ T(k) \\ T(k-1) \\ T(k-2) \end{bmatrix},$$

which is a dynamical input of the neural network (third order dynamic).

In addition $T^*(k+1) = \varphi(P(k))$ is a function of the neural network, which can be precisely described by the following equation:

$$\varphi(P(k)) = f_2\left(W_2 \times f_1\left(W_1 \times P(k)\right)\right), \qquad\qquad (1)$$

where $f_1(x)$ and $f_2(x)$ are activation functions of the corresponding layer.

If $f_1(x)$ and $f_2(x)$ are analytically invertible functions and $T_{sp}(k)$ is the desired temperature, then the control signal can be calculated by following equation:

$$u(k) = \varphi^{-1}([u(k-1),\ u(k-2),\ T_{sp}(k+1), T_{sp}(k),\ T_{sp}(k-1), T_{sp}(k-2)]),$$

where $\varphi^{-1}(x)$ is a inverse function of (1).

As an example, let $u(k) = 30\%$ and after that $u(k+1) = 40\%$, it means

$$u(k) = \frac{1.8}{6} \times 100\% = 30\% \quad \text{and} \quad u(k+1) = \frac{2.4}{6} \times 100\% = 40\%$$

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. Especially it should be noted that even though only cooling and heating procedures are described in full details e.g. in connection with figures 4-8, the same idea can be implemented also for adjusting the other environmental conditions described for example in this document elsewhere, as well as also other environmental condition adjusting procedures know the skilled person.

However, it should be noted that the functioning of the controlling means, i.e. the method steps of the invention described above can be implemented at least partly by a suitable computer program product, when said computer program product is run on a computer or the like, such as the controlling means or the server described in this document.

It is also to be noted that the traffic information service and weather forecast service are only examples and many other additional parties and services generating useful information in view of the environmental condition controlling may be used and added into the system as the skilled person will realize.

Again it should be noted that a neural network technique as well as self-learning algorithms can be used according to an embodiment for controlling functions of a building, using prediction of conditions in the building and self learning, such as using presence information for controlling functions in entities or other premises such roads. As an example, the presence information may be used for controlling the lighting of roads in order to use the light only in places where it is needed currently or predicted to be needed within in a short time period.

Furthermore, the current invention can be applied also in adjusting the environmental conditions of number of entities such as at least one entity, wherein the entity has desired environmental conditions for at least two different states. There the system may comprise equipments controlled by controlling means for changing and/or maintaining the environmental condition of the entities. The controlling means may be adapted to provide controlling parameters to equipments using the neural network idea of the current invention for adjusting the environmental condition of said entity so that at least one parameter used for controlling the environmental condition of said entity depends on at least one measured environmental condition parameter of another entity being different from the entity, which environmental condition is adjusted by said equipment.

In this description a control system has been described in which neural network control has been used. However, it should be noted that many of the described features can also be applied in systems where some other control than neural network is used, separately or in various combinations. Therefore, such features may also provide basis for divisional patent applications.

**Claims**

1.  A method for adjusting environmental conditions of an entity, **characterized in that**, the entity has desired environmental condition to be maintained and/or achieved, and **in that** the method comprises

    a) adjusting the environmental condition of the entity by equipments, where the adjusting is based on at least one controlling parameter provided by a controlling means,
    b) measuring at least one environmental condition in said entity by a measuring means and signalling it to the controlling means,
    c) signalling at least one outer parameter to the controlling means, where said outer parameter is independent of the entity's property,
    d) providing said at least one controlling parameter to said equipments by said controlling means, where the controlling parameter is generated by using a neural algorithm having at least one of the following as an input: at least one measured environmental condition parameter related to said entity, and at least one outer parameter.

2.  A method of claim 1, wherein said environmental condition relates to at least one of the following:

    a) indoor temperatures,
    b) indoor humidity,
    c) indoor $CO_2$-level, and/or
    d) indoor/outdoor lighting,
    and wherein said controlling means controls at least one of the following equipment:
    e) heating means,
    f) cooling means,
    g) ventilation means,
    h) lighting means and/or
    i) means for affecting humidity.

3.  A method of any of claims 1-2, wherein the outer information relates to general and/or identified presence information of a user in the entity and/or predicted location information of the user indicating when the user will left or arrive in the entity, where said predicted location information of the user is generated using a neural network, self-learning algorithms and/or traffic information gathered from the environment where the user moves.

4. A method of any of claims 1-3, wherein the outer information relates in addition to current outdoor weather conditions, weather forecast information, and/or tariff of energy costs.

5. A method of any of claims 1-4, wherein said neural algorithm is a self-learning neural algorithm, and it is used for generating heating inertia information about the entity taking into account the measured environmental conditions of the entity as well as the outer parameters and the consumed energy determined by said neural algorithm, when the environmental condition of said entity is adjusted.

6. A method of any of claims 1-5, and especially claim 5, wherein said self-learning neural algorithm is adapted to take into account at least one of the following:

   a) current and desired indoor temperatures (of the entity in question and/or also of the other nearest) and possibly at least one of the outer information of claim 4, when it is adapted to determine the control parameter signal to said equipments, such as heating, cooling and/or ventilation means,
   b) current and desired indoor humidity and possibly at least one of the outer information of claim 4, when it is adapted to determine the control parameter signal to said equipments, such as means for affecting humidity and/or ventilation means,
   c) current and desired indoor $CO_2$-level and possibly at least one of the outer information of claim 4, when it is adapted to determine the control parameter signal to said equipments, such as ventilation means, and/or
   d) current and desired indoor/outdoor lighting and possibly at least one of the outer information of claim 4, when it is adapted to determine the control parameter signal to said equipments, such as lighting means.

7. A method of any of claims 1-6, wherein the controlling parameters provided by said neural algorithm is based also on the measured environmental condition and said desired environmental condition for said entity, which environmental condition is to be adjusted, in order to achieve or maintain said desired environmental condition for the desired state of said entity.

8. A controlling system for adjusting environmental conditions of an entity, **characterized in that**, the entity has desired environmental condition to be maintained and/or achieved, and **in that** the system comprises

   a) equipments for adjusting the environmental condition of an entity, where the adjusting is based on at least one controlling parameter provided by a controlling means,
   b) measuring means for measuring at least one environmental condition in said entity and signalling the measured environmental condition information to the controlling means, and
   c) means for signalling at least one outer parameter to the controlling means, where said outer parameter is independent of the entity's property,
   and where
   d) said controlling means is adapted generate said at least one controlling parameter by using a neural algorithm having at least one of the following as an input: at least one measured environmental condition parameter related to said entity, and at least one outer parameter.

9. A controlling system claim 8, wherein said environmental condition information relates to at least one of the following: indoor temperatures, indoor humidity, indoor $CO_2$-level, and/or indoor/outdoor lighting.

10. A controlling system of any of claims 8-9, wherein the outer information relates to presence information of a user in the entity and/or predicted location information of the user indicating when the user will left or arrive in the entity, where said predicted location information of the user is generated using a neural network, self-learning algorithms and/or traffic information gathered from the environment where the user moves.

11. A controlling system of any of claims 8-10, wherein the outer information relates in addition to current outdoor weather conditions, weather forecast information, and/or tariff of energy costs.

12. A controlling system of any of claims 8-11, wherein said neural algorithm is a self-learning neural algorithm, and it is used for generating heating inertia information about the entity taking into account the measured environmental conditions of the entity as well as the outer parameters and the consumed energy determined by said neural algorithm, when the environmental condition of said entity is adjusted.

**13.** A controlling system of any of claims 8-12, and especially claim 12, wherein said self-learning neural algorithm is adapted to take into account at least one of the following:

a) current and desired indoor temperatures (of the entity in question and/or also of the other nearest) and possibly at least one of the outer information of claim 11, when it is adapted to determine the control parameter signal to said equipments, such as heating, cooling and/or ventilation means,

b) current and desired indoor humidity and possibly at least one of the outer information of claim 11, when it is adapted to determine the control parameter signal to said equipments, such as means for affecting humidity and/or ventilation means,

c) current and desired indoor $CO_2$-level and possibly at least one of the outer information of claim 11, when it is adapted to determine the control parameter signal to said equipments, such as ventilation means, and/or

d) current and desired indoor/outdoor lighting and possibly at least one of the outer information of claim 11, when it is adapted to determine the control parameter signal to said equipments, such as lighting means.

**14.** A controlling system of any of claims 8-13, wherein the controlling parameters provided by said neural algorithm is based also on the measured environmental condition and said desired environmental condition for said entity, which environmental condition is to be adjusted, in order to achieve or maintain said desired environmental condition for the desired state of said entity.

**15.** A computer program product for adjusting environmental conditions of an entity, **characterized in that**, the entity has desired environmental condition to be maintained and/or achieved, and **in that** the computer program product is adapted to perform the steps of at least one of the method claims 1-7, when said computer program product is run on a computer.

FIG. 1

FIG. 2

300 — Adjusting environmental conditions of entity

301 — Setting desired environmental condition

302 — Measuring environmental condition

303 — Signalling measurement to controlling means

304 — Signalling outer parameter to controlling means

305 — Generating controlling parameter by using a neural algorithm

306 — Providing controlling parameter to equipment

307 — Adjusting the environmental condition

FIG. 3

FIG. 4

FIG. 5

**FIG. 6**

**FIG. 9**

**FIG. 10**

700 Heating

701 ΔT%/ds=0 — Yes → 702 Temp hold
701 No

703 $T_c \leq T_{sp}$ — Yes / No → 704 SoftReg

702 Temp hold → 706 $minht \leq T_c \leq maxht$ — Yes → 707 NN decision
706 No

707 NN decision → 708 $u \geq 0.97$ — No → 709 $u \leq 0.03$ — No → 710 Hold
708 Yes
709 Yes → 800 Cooling

704 SoftReg → 705 ΔT%/ds=0 — No → 715 $T_c \geq maxht + udz$ — Yes → 800 Cooling
705 Yes
715 No → 716 $T_c < minht$ — No / Yes

714 $maxht \leq T_c \leq maxht + udz$ — Yes

713 $T_c < minht$ — Yes / No

711 $T_c \geq maxht + udz$ — Yes

800 Cooling

Fig 8

**FIG. 7**

**FIG. 8**

- 800 Cooling
- 801 ΔT%ds=0 — No / Yes
- 803 $T_c \geq T_{sp}$ — Yes / No
- 804 SoftReg
- 805 ΔT%ds=0 — Yes / No
- 816 $T_c >$ maxht — No / Yes
- 802 Temp hold
- 806 minht $\leq T_c \leq$ maxht — Yes / No
- 807 NN decision
- 808 $u \geq 0.97$ — No / Yes
- 809 $u \leq 0.03$ — No / Yes
- 810 Hold
- 811 $T_c \leq$ minht - ldz — Yes
- 813 $T_c >$ maxht — Yes / No
- 814 minht $\geq T_c \geq$ minht - ldz — Yes / No
- 815 $T_c \leq$ minht - udz — Yes / No
- 700 Heating
- Fig 7

Europäisches
Patentamt

European
Patent Office

Office européen
des brevets

# EUROPEAN SEARCH REPORT

**Application Number**

EP 09 17 6692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mozer M C; Vidmar L; Dodier R H: "The neurothermostat: predictive optimal control of residential heating systems" In: Mozer M C; Jordan M I; Petsche T: "Advances in Neural Information Processing Systems 9. Proceedings of the 1996 Conference 2-5 Dec. 1996" 1997, MIT Press , London, UK , XP002577900 ISBN: 0262100657 , pages 953-959 * the whole document * | 1-15 | INV. G05B13/02 F24F11/00 |
| X | JP 2006 078009 A (SHIMIZU CONSTRUCTION CO LTD) 23 March 2006 (2006-03-23) * the whole document * | 1,8,15 | |
| X | MANU GUPTA ET AL: "Adding GPS-Control to Traditional Thermostats: An Exploration of Potential Energy Savings and Design Challenges" 11 May 2009 (2009-05-11), PERVASIVE COMPUTING, SPRINGER BERLIN HEIDELBERG, BERLIN, HEIDELBERG, PAGE(S) 95 - 114 , XP019117472 ISBN: 9783642015151 * page 96, line 20 - page 109, line 18 * | 1-15 | TECHNICAL FIELDS SEARCHED (IPC) G05B F24F |

The present search report has been drawn up for all claims

| Place of search | Date of completion of the search | Examiner |
|---|---|---|
| Munich | 19 April 2010 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 6692

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2010

| Patent document cited in search report | Publication date | Patent family member(s) | Publication date |
|---|---|---|---|
| JP 2006078009 A | 23-03-2006 | JP 4392604 B2 | 06-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6904385 B
- US 6965319 B
- US 7451017 B
- US 6577962 B